# EUROPÄISCHE PATENTSCHRIFT

(11) **EP 3 736 082 B1**
(45) Veröffentlichungstag und Bekanntmachung des Hinweises auf die Patenterteilung: **06.09.2023**
(21) Anmeldenummer: 20172414.3
(22) Anmeldetag: 30.04.2020
(51) Int. Cl.: B23Q 11/00, B23F 1/00

(54) **VERFAHREN DER SPANENDEN ERZEUGUNG VON VERZAHNUNGEN UND VERZAHNUNGSMASCHINE**
METHOD FOR THE CUTTING PRODUCTION OF GEARING AND GEAR CUTTING MACHINE
PROCÉDÉ DE FABRICATION PAR ENLÈVEMENT DES COPEAUX D'ENGRENAGES ET MACHINE À TAILLER LES ENGRENAGES

(30) Priorität: 06.05.2019 DE 102019003178
(43) Veröffentlichungstag der Anmeldung: 11.11.2020
(73) Patentinhaber: GLEASON-PFAUTER MASCHINENFABRIK GMBH, 71636 Ludwigsburg (DE)
(72) Erfinder: PHILIPPIN, Matthias, 71277 Rutesheim (DE); STAIGER, Daniel, 72793 Pfullingen (DE)
(74) Vertreter: Leinweber & Zimmermann

(56) Entgegenhaltungen:
- WO-A1-96/34720
- JP-A- S5 542 789

## Beschreibung

Die Erfindung betrifft ein Verfahren der spanenden Erzeugung oder Bearbeitung von Verzahnungen oder anderen periodischen Strukturen eines metallischen Werkstückes, bei dem die dabei anfallenden Späne über eine Spanabfuhr zu einer Spansammelstelle gelangen, wobei die Spanabfuhr einen in einer Abfuhrrichtung verlaufenden Abfuhrweg mit einer flächigen Auflage aufweist, auf welcher abgeführte Späne aufliegen, sowie eine dazu ausgelegte Verzahnungsmaschine.

Derartige Verfahren sind in der Technik gut bekannt, die prominentesten Vertreter hinsichtlich der Erzeugung von z.B. Verzahnungen sind das Wälzfräsen, Wälzstoßen und Wälzschälen, sofern es um die Weichbearbeitung geht, doch auch in der Hart- /Feinbearbeitung kommen spanend-schneidende Verfahren zum Einsatz, wie etwa das Hartschälen oder andere dem Fachmann bekannte Verfahren.

Bei all diesen Verfahren fallen während der Bearbeitung Späne an, die zur Vermeidung von Späneansammlungen aus dem Bearbeitungsraum zu führen sind. Diese während der Bearbeitung bezüglich der Werkstückdrehachse in alle Richtungen fliegenden Späne werden dazu üblicherweise über die Spanabfuhr zu einer Spansammelstelle gesammelt, welche regelmäßig geleert werden kann, oder auch kontinuierlich durch nachfolgende Späneförderer wie beispielsweise in der DE 10 2017 008 420 A1 offenbart. Es geht bei der Spanabfuhr somit um eine maschineninterne Spanbewegung zu einer maschineninternen Spansammelstelle vor einer Spanausfuhr aus der Maschine.

Je nach Gestaltung des Maschinenbetts, der Innenflächen in der Nähe des Bearbeitungsbereichs und anderen Gegebenheiten stellt sich eine solche Spanabfuhr zur Spansammelstelle mehr oder weniger problematisch dar. Zur Vermeidung von Spanansammlungen in und nahe dem Bearbeitungsbereich oder auf den Abfuhrwegen der Spanabfuhr ist beispielsweise vorgeschlagen worden, das Bearbeitungsverfahren regelmäßig zu unterbrechen und währen der Unterbrechung Spanansammlungen händisch zu entfernen. Dies steht natürlich einem weitgehend automatisierten Verfahren, das ohne zwischenzeitliche Unterbrechungen länger arbeiten soll, entgegen, woraufhin Konstruktionen entwickelt wurden, die relevanten Auflageflächen der Spanabfuhr so stark geneigt zu gestalten, dass die Späne alleine aufgrund der Schwerkraft mit (Nassbearbeitung) oder ohne (Trockenbearbeitung) Schmier- und/oder Kühlungsfluiden allein unter Einfluss der Schwerkraft zur Spansammelstelle gelangt. Des Weiteren sind zur Vermeidung von Spanansammlungen Druckluftgebläse eingesetzt worden; andere Verzahnungshersteller setzen zur Späneabfuhr auch auf Schneckenförderer.

WO96/34720 A1 offenbart ein Verfahren gemäß dem Oberbegriff von Patentanspruch 1 und 8.

JP-S-5542789 A offenbart eine vibrierende Spanabfuhrplatte mit vertikaler Bewegungsrichtung der Vibrationsbewegung.

Der Erfindung liegt die Aufgabe zugrunde, ein Verfahren der eingangs genannten Art hinsichtlich der Spanabfuhr insbesondere hinsichtlich einer guten Kombination aus Zuverlässigkeit und Einfachheit zu verbessern.

Diese Aufgabe wird in verfahrenstechnischer Hinsicht durch eine Weiterbildung des Verfahrens der eingangs genannten Art gelöst, das die Merkmale von Patentanspruch 1 aufweist.

Durch die erfindungsgemäß vorgenommene reziproke Bewegung der Auflage entlang einer überwiegend zur Abfuhrrichtung parallelen Bewegungsrichtung werden die Späne im Zusammenspiel mit der Reibung und Masseträgheit der Späne Beschleunigungen ausgesetzt, die wenigstens einen Übergang von Haftreibung zu Gleitreibung der Späne bewirken und somit die Wahrscheinlichkeit für ein Liegenbleiben der Späne auf der Auflage vermindern. Entsprechend mehr Späne bzw. Spanansammlungen gelangen zur Spansammelstelle, so dass ggf. ein Zeitabstand zwischen aufeinanderfolgenden Wartungsunterbrechungen zur Entfernung von Späneansammlungen vergrößert werden können oder für Unterbrechungen der Verzahnungsbearbeitung keinen Wartungsintervalle zur Späneansammlungsentfernung mehr erforderlich sind.

Hinsichtlich der Bewegungsrichtung der reziproken Bewegung wird an eine Bewegungsrichtungskomponente orthogonal zur flächigen Auflage gedacht, um ggf. zwischenzeitlich den Auflagekontakt zwischen den Spänen und der Auflage aufzuheben. Auch Bewegungskomponenten quer zur Abfuhrrichtung sind denkbar. Erfindungsgemäß ist vorgesehen, dass eine Bewegungsrichtung der reziproken Bewegung eine überwiegende zur Abfuhrrichtung parallele Richtungskomponente aufweist. Auf diese Weise entstehen bereits entsprechende Beschleunigungskomponenten in Richtung der Abfuhrrichtung.

Die reziproke Bewegung kann auch Teil einer komplexeren Bewegung sein, die Bewegungskomponenten in mehr als eine Raumrichtung umfasst.

In zeitlicher Hinsicht wird zwar eine Periodizität der reziproken Bewegung im Sinne einer harmonischen Schwingung bevorzugt, die Bewegungsart kann jedoch auch chaotischer Natur sein und einem Zufallsmuster folgen, sowohl hinsichtlich der Zeit als auch hinsichtlich einer Amplitude. Wichtig ist, dass immer wieder Richtungsumkehrungen der Bewegung erfolgen, auch bei unregelmäßigen Amplituden, die um einen unbewegten Amplitudenmittelwert schwanken, d.h. die flächige Auflage ändert zeitlich gemittelt ihre Position nicht. Hinsichtlich der Wiederholung der reziproken Bewegung ist eine Wiederholungsfrequenz bevorzugt größer als 10 Hz und/oder kleiner als 90 Hz. Insbesondere sind Werte von größer als 15 Hz, bevorzugt größer als 20 Hz, insbesondere größere als 30 Hz vorgesehen und/oder Werte von kleiner als 80 Hz, bevorzugt kleiner als 75 Hz, insbesondere kleiner als 70 Hz. In diesem Frequenzbereich verläuft die Spanabfuhr der in den Verzahnungsprozessen etwa des Wälzschälens, Wälzfräsens und Wälzstoßens typisch erzeugten Späne besonders günstig.

Des Weiteren ist bevorzugt vorgesehen, dass eine Bewegungslänge der reziproken Bewegung größer ist als 0,1 mm, bevorzugt größer als 0,15 mm, insbesondere größer als 0,2 mm, und/oder kleiner ist als 1 mm, bevorzugt kleiner als 0,7 mm, insbesondere kleiner als 0,5 mm. Für in der soeben genannten Art erzeugten Späne ergibt sich dadurch nicht nur ein vernünftiger Kompromiss zwischen zufriedenstellender Spanabfuhr und Belastung der Lagerung der flächigen Auflage, sondern auch gute "Rutschzeiten" für die Späne allgemein.

Im Falle unregelmäßiger reziproker Bewegungen hinsichtlich Zeit und/oder Amplitude stellen die genannten Werte für die Wiederholungsfrequenz und die Bewegungslängen zeitliche Mittelwerte dar.

In einer bevorzugten Ausgestaltung des Verfahrens erfolgt eine Bewegung der Späne auf der Auflage gewichtskraftunterstützt, insbesondere durch eine Neigung des Abfuhrwegs der Horizontalen von wenigstens 3%, bevorzugt wenigstens 5%, weiter bevorzugt wenigstens 8%, insbesondere wenigstens 10%. Zum einen erhöht dies die Effektivität der Spanabfuhr, zum anderen erlaubt dies auch den Einsatz unterschiedlicher Betriebsarten einer Verzahnungsmaschine, beispielsweise auch eine zusätzliche Betriebsart in der Nassbearbeitung bei abgeschaltetem Antrieb für die reziproke Bewegung.

Besonders bevorzugt ist die Neigung des Abfuhrwegs zur Horizontalen geringer als 25%, insbesondere geringer als 20%. Dies erlaubt räumlich konstruktive Einsätze der flächigen Auflage in der Verzahnungsmaschine, die eine flexiblere und günstigere Gestaltung selbiger hinsichtlich der Steifigkeit einer dafür herangezogenen Maschinenbettstruktur begünstigen.

Besonders gut kommt die Erfindung für die Spanabfuhr in Form einer in Trockenbearbeitung ausgeführten spanenden Bearbeitung zum Tragen.

In vorrichtungstechnischer Hinsicht wird die Aufgabe gelöst durch eine Verzahnungsmaschine zur spanenden Erzeugung und Bearbeitung von Verzahnungen oder anderen periodischen Strukturen eines metallischen Werkstücks, mit einem Maschinenbett, einer in dem Maschinenbett angeordneten Werkstückaufnahme zur insbesondere drehbaren Lagerung eines zu bearbeitenden Werkstücks, einer Spansammelstelle zur Aufnahme angesammelter Späne, und einer Spanabfuhreinrichtung zum Verbringen der bei der Bearbeitung anfallenden Späne zu der Spansammelstelle, wobei die Spanabfuhreinrichtung einen in einer Abfuhrrichtung verlaufenden Wegabschnitt mit einer flächigen Auflage für die Späne aufweist, wobei die Verzahnungsmaschine die weiteren Merkmale des Anspruchs 8 aufweist.

Die Vorteile der erfindungsgemäßen Verzahnungsmaschine ergeben sich bereits im Wesentlichen aus den oben genannten Vorteilen des erfindungsgemäßen Verfahrens. In einer bevorzugten Gestaltung der Verzahnungsmaschine weist die Verzahnungsmaschine auch eine an den Aktuator angekoppelte Steuereinrichtung auf, die Steueranweisungen zur Ausführung eines Verfahrens nach einem der oben genannten Aspekte aufweist. Hierzu ist auch bevorzugt vorgesehen, dass die Neigung der flächigen Auflage zur Horizontalen in den in den Ansprüchen 5 und 6 definierten Neigungsbereichen liegt.

Bevorzugt ist vorgesehen, dass die flächige Auflage federnd gelagert ist. Daraus ergeben sich nur geringe Belastungen für die Ankopplung der flächigen Auflage an die Verzahnungsmaschine, was die Langlebigkeit der Spanabfuhreinrichtung erhöht.

Hinsichtlich der Art, wie die reziproke Bewegung erzeugt wird, unterliegt die Erfindung keinen besonderen Einschränkungen, bevorzugt wird jedoch ein Linearvibrator herangezogen. Es können jedoch auch andere Antriebe, wie etwa Unwuchtantriebe verwendet werden.

In einer bevorzugten Gestaltung der Verzahnungsmaschine ist die Spansammelstelle zu einer Seite der Werkstücklagerung angeordnet, ein zweiter Bereich der Spanabfuhreinrichtung weist unbewegliche und geneigte Abschnitte auf und ein erster Bereich der Spanabfuhreinrichtung, der von der Spansammelstelle weiter entfernt ist (Bezug: Abstand entlang des Spanabfuhrwegs) als der zweite Bereich, weist die bewegliche Auflage auf. Das heißt, die Auflage mit der reziproken Bewegung muss nicht über den gesamten Spanabfuhrweg der Spanabfuhreinrichtung verlaufen, und es ist sogar bevorzugt, dass dieser nur einen Abschnitt der bestehenden Spanabfuhrwege bildet. An dieser Stelle ist anzumerken, dass durchaus nicht alle die Spansammelstelle erreichenden Späne zwingend über diesen Abschnitt mit der flächigen Auflage gelangen müssen und somit parallele Abfuhrwege existieren können. So kann sogar ein Großteil der Späne an der Bearbeitungsseite nach unten fallen und an diesem Abschnitt vorbei der Spansammelstelle zugeführt werden. Es wird demnach bevorzugt, dass die Anordnung der flächigen Auflage reziproker Bewegung in der Verzahnungsmaschine so angeordnet ist, dass jedenfalls ein nennenswerter Teil (mehr als 10%), bevorzugt ein relevanter Teil (mehr als 20%), insbesondere ein erheblicher Teil (mehr als 30%) der anfallenden Späne über die flächige Auflage (oder insgesamt mehrere vorgesehene flächige Auflagen reziproker Bewegung) gelangen.

In einer weiteren bevorzugten Gestaltung ist der Wegabschnitt des Spanabfuhrwegs mit der flächigen Auflage reziproker Bewegung ein erster Wegabschnitt, der in einen zweiten Wegabschnitt mündet, wobei eine Neigung des zweiten Wegabschnitts insbesondere größer ist als 30°, bevorzugt größer als 35°, insbesondere größer als 40°.

In einer vorteilhaften Gestaltung ist vorgesehen, dass der Quotient aus einer von dem ersten und zweiten Wegabschnitt insgesamt überwundenen Höhendifferenz zur Weglänge von gemeinsam dem ersten und zweiten Wegabschnitt größer ist als 0,12, bevorzugt größer als 0,2, insbesondere größer als 0,28 und/oder kleiner ist als 0,6, bevorzugt kleiner ist als 0,52, insbesondere kleiner ist als 0,44. Dies erlaubt es bei zufriedenstellender Spanabfuhr flächige Auflagen reziproker Bewegung mit festen Rutschen (Rampen) zu kombinieren.

Wie bereits gesagt, können mehrere Abschnitte der Spanabfuhrwege, die seriell und/oder parallel angeordnet sein können, mit flächigen Auflagen reziproker Bewegung ausgestattet werden, so ist bevorzugt vorgesehen, dass die Verzahnungsmaschine mit zwei oder mehreren, insbesondere genau zwei flächigen, durch einen jeweiligen Aktuator in reziproke Bewegung versetzbaren Auflagen versehen ist. Konkret könnten zwei solche flächigen Auflagen reziproker Bewegung eine Tischspindel für das zu bearbeitenden Werkstück flankieren. Bei genau zwei derartigen Anordnungen werden auch nur zwei Aktuatoren erforderlich, es kann sich auch die Anzahl zusätzlich erforderlicher Komponenten in Grenzen halten.

In einer weiteren bevorzugten Ausführungsform ist die Verzahnungsmaschine mit einem Wartungszugang zu der Werkstücklagerung, beispielsweise der Tischspindel versehen, der, in Projektion auf eine horizontale Ebene gesehen, sich mit dem ersten Bereich überschneidet. Auf diese Weise kann der oben genannte Vorteil der Ermöglichung einer verbesserten Steifigkeit der Verzahnungsmaschine, insbesondere ihres Maschinenbettes, dort zum Einsatz kommen, wo diese durch den Wartungszugang geschwächt ist.

Weitere Merkmale, Einzelheiten und Vorteile der Erfindung ergeben sich aus der nachfolgenden Beschreibung mit Bezug auf die beigefügten Figuren, von denen
Fig. 1 eine Perspektivansicht eines Maschinenbetts mit einer Spanabfuhreinrichtung zeigt,
Fig. 2 eine einen Abschnitt der Spanabfuhreinrichtung aus Fig. 1 zeigende Seitenaufrissansicht ist, und
Fig. 3 ein Messdiagramm f-t zeigt.

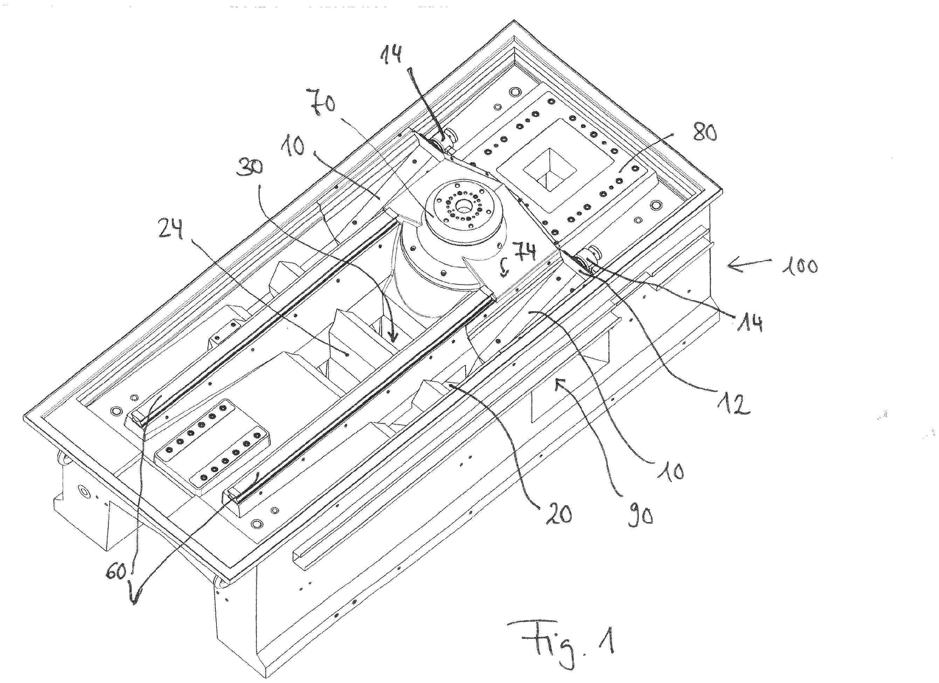

In Fig. 1 ist ein Maschinenbett 100 einer Verzahnungsmaschine dargestellt. Etwas seitlich gegenüber der Maschinenbettmitte versetzt befindet sich eine Tischspindel 70, auf der in fachmännisch üblicher Weise ein einer Verzahnungsbearbeitung zu unterwerfendes Werkstück aufgespannt werden kann. Dabei kann es sich um einen Werkstückrohling handeln, an dem eine Verzahnung zu erzeugen ist, oder ein bereits vorverzahntes Werkstück, dessen Verzahnung weitergehend bearbeitet wird. Das Werkstück ist jedoch in Fig. 1 ebenso wenig dargestellt wie der werkzeugseitige Aufbau der Verzahnungsmaschine, der üblicherweise zur Bewegung des Werkzeugs ein oder mehrere Schlitten aufweist. Schienen 60 zur diesbezüglichen Führung eines Radialschlittens sind in Fig. 1 links der Tischspindel 70 dargestellt. Ebenfalls nicht dargestellt ist eine auf der der Werkzeugseite gegenüberliegenden Seite der Tischspindel 70 vorsehbare Anordnung, lediglich eine Montagefläche 80 hierfür ist dargestellt. An dieser können weitere Komponenten wie etwa eine Reitstockanordnung oder eine Werkstückwechselanordnung vorgesehen werden. Durch Verkleidungen bilden diese eine Prellwand, so dass davon abprallende Späne auf die unten erläuterte Auflage 10 gelangen.

Die bei der Verzahnungsbearbeitung anfallenden Späne werden bei dem Maschinenbett 100 an einer Spansammelstelle 30 gesammelt, von der die Späne letztlich (durch regelmäßige oder kontinuierliche Leerung) aus dem Maschinenbett 100 entfernt werden. Die Spansammelstelle 30 ist in diesem Ausführungsbeispiel im Wesentlichen in der Mitte des Maschinenbetts 100 angeordnet, zur Werkzeugseite hin neben der Tischspindel 70.

Über in diesem Ausführungsbeispiel maschinenbettfeste Rutschen 20, die tischspindelnahe Bereiche der Schienen 60 untertunneln und eine Neigung gegenüber der Horizontalen haben, gelangen Späne aus dem seitlich gesehen außerhalb der Führungsschienen 60 liegenden Bereich um den Einlass der Rutsche 20 aufgrund des Schwerkrafteinflusses zur Spansammelstelle 30. Wie aus Fig. 1 erkennbar ist, sind die Rutschen 20 quer zur Radialrichtung der Schienen 60 gesehen beidseitig vorgesehen. Zudem ist eine die Rutsche 20 jeweils in zwei Teilbereiche unterteilende Verstärkungsquerrippe 24 vorgesehen, um das Maschinenbett 100 in diesem Bereich geringerer Materialdichte zu versteifen.

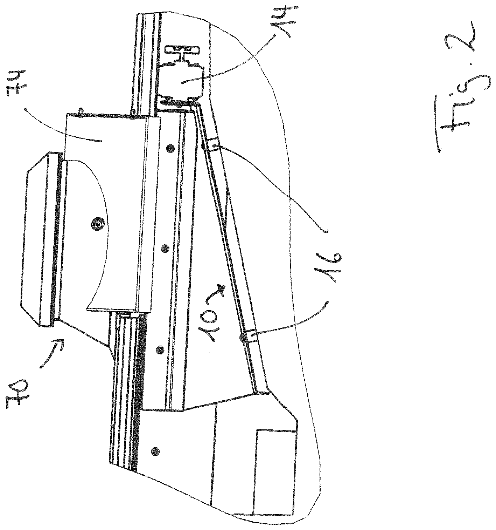

Werkstückseitig gelangen Späne zu dem Eintrittsbereich der Rutsche 20 über (in diesem Ausführungsbeispiel wieder beidseitig vorgesehene) flächigen Auflagen 10. Diese sind gegenüber dem Schienenbett 100 in geringem Umfang beweglich, indem sie zum einen über in Fig. 2 angedeutete Federlagerungen 16 elastisch federnd am Maschinenbett 100 abgestützt sind. Diese beweglichen Flächen 10 sind gegenüber der Horizontalen geringer geneigt als die in Spanabfuhrrichtung nachfolgend angeordneten Rutschen 20, und zwar in diesem Ausführungsbeispiel nur um 15°. Jedenfalls bei einer Trockenbearbeitung würden die (trockenen) Späne auf einer Auflage dieser Neigung nicht mehr eigenständig (schwerkraftbedingt) zum Eintritt der Rutsche 20 gelangen. Sie tun dies jedoch aufgrund der Wirkung eines über einen in diesem Ausführungsbeispiel vorgesehenen Vertikalflansch der Auflage 10 an ihrem der Rutsche 20 abgewandten Ende angekoppelten Linearvibrators 14, der die flächige Auflage 10 zu einer kontinuierlichen reziproken Bewegung mit in diesem Ausführungsbeispiel einer Wiederholungsfrequenz von etwa 50 Hz ausführen lässt.

Auf die punktgenaue Frequenz kommt es jedoch nicht an, vielmehr liefern die oben angegebenen Frequenzwerte vernünftige Bereiche für eine gut funktionierende Spanabfuhr in diesem Abschnitt zwischen der Tischspindel 70 und der Rutsche 20. Bevorzugt können insbesondere Frequenzen zwischen 40 und 60 Hz eingesetzt werden. Der von der reziprok bewegten flächigen Auflage 10 abgedeckte Bereich des Spanabfuhrwegs liegt, in radialer Richtung der Schienen 60 gesehen, im Wesentlichen auf Höhe der Tischspindel 70, wobei in einem quer zu dieser Richtung gesehen Zwischenabschnitt zwischen der Tischspindel 70 und den flächigen Auflagen 10 links und rechts (in Querrichtung) eine Abdeckung 74 vorgesehen ist, die ebenfalls geneigt ist und dafür sorgt, dass in diesen Zwischenabschnitt fallende Späne in Querrichtung zu der flächigen Auflage 10 gelangen. Die Neigung der Abdeckung 74 liegt näher der Neigung der Rutsche 20 als der Neigung der flächigen Auflage 10 und ist auch bei Trockenbearbeitung dafür ausreichend, dass darauf keine größeren Späneansammlungen länger liegen bleiben.

Des Weiteren findet sich wenigstens an einer Seite des Maschinenbetts 100, wie in Fig. 1 erkennbar, eine Wartungsöffnung 90 an einer Längsseite des Maschinenbetts 100, wiederum auf Höhe der Tischspindel 70, um einen Wartungszugang zu der Tischspindel 70 zu schaffen. Dies schwächt in diesem Bereich die strukturelle Integrität des Maschinenbetts 100. Aufgrund der vergleichsweise geringen Neigung der flächigen Auflage 10 verbleibt jedoch verglichen mit einer Situation einer stärkeren Neigung mehr Raum für Material des Maschinenbetts 100, so dass eine gewünschte Steifigkeit des Maschinenbetts besser erreicht wird.

In Fig. 2 ist die flächige Auflage 10 nochmals in einer seitlichen Aufrissansicht dargestellt. In diesem Bereich verläuft die Spanabfuhrrichtung somit parallel zur Neigung der flächigen Auflage 10. Späne oder Späneansammlungen können aufgrund ihrer Trägheit der reziproken Bewegung der flächigen Auflage 10 jedenfalls nicht durchwegs folgen und werden sich daher in Fig. 2 nach und nach von rechts (oberem Ende) nach links (unterem Ende der flächigen Auflage 10) bewegen. In diesem Ausführungsbeispiel ist der Aktuator ein Linearvibrator, ein vergleichbarer Effekt könnte jedoch auch durch Unwuchtantriebe erzeugt werden. Die Haftreibung zwischen Spänen oder Spänehaufen und der flächigen Auflage 10 wird fortlaufend überwunden, dabei können die Späne bzw. Spänehaufen auch Mikrowurfbewegungen ausführen, die in ein Gleiten enden.

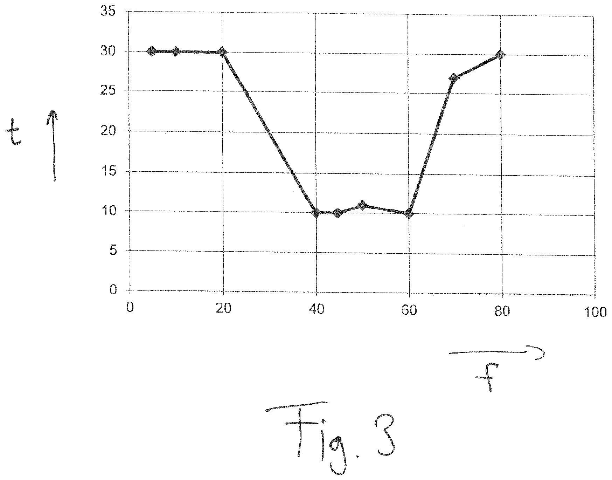

In Fig. 3 sind noch Messergebnisse für die Abfuhrzeit t von typischen Spänen der Verzahnungsbearbeitung für das Überwinden einer leicht geneigten Teststrecke in Abhängigkeit der Frequenz f der reziproken Bewegung dargestellt, man erkennt besonders gute Rutschzeiten für etwa 40 bis 60 Hz.

Es sind auch alternative Ausführungsformen denkbar, in denen sich zwei oder mehr reziproke Bewegungen überlagern oder die Linearrichtung nicht wie im Ausführungsbeispiel horizontal verläuft und bei der gegebenen geringen Neigung dadurch einen überwiegenden Anteil der Bewegungsrichtung der reziproken Bewegung parallel zur Abfuhrrichtung hat. Insoweit ist die Anordnung des Aktuators 14 (in diesem Ausführungsbeispiel der Linearvibrator) sowie deren Anzahl nicht auf die im Ausführungsbeispiel gezeigte Variante eingeschränkt und könnte auch anders an die flächige Auflage ankoppeln. So könnte beispielsweise in einer Betriebsart der Trockenbearbeitung die Spanabfuhr mit aktiviertem Aktuator 14 betrieben werden, und in einer zweiten Betriebsart für eine Nassbearbeitung auch mit abgeschaltetem Aktuator 14. Es versteht sich, dass eine Nassbearbeitung auch bei eingeschalteter reziproker Bewegung möglich ist.

Als Oberflächen der Auflageflächen 10 kommen glatte Oberflächen in Betracht wie auch strukturierte Oberflächen auch mit punktierter Auflage wie z.B. 5WL-Bleche, etwa 5WL gebürstet, 5WL-2R, 6WL-Bleche oder höher, Karos, Rauten, etc., bevorzugt sind 5WL gebürstete Bleche und glatte Bleche.

## Patentansprüche

1. Verfahren der spanenden Erzeugung oder Bearbeitung von Verzahnungen oder anderen periodischen Strukturen eines metallischen Werkstückes, bei dem die dabei anfallenden Späne über eine Spanabfuhr (74, 10, 20) zu einer Spansammelstelle (30) gelangen, wobei die Spanabfuhr einen in einer Abfuhrrichtung verlaufenden, geringer als 30° geneigten Abfuhrweg mit einer flächigen Auflage (10) aufweist, auf welcher abgeführte Späne aufliegen, wobei man die Auflage (10) eine reziproke Bewegung in einer Bewegungsrichtung ausführen lässt, **dadurch gekennzeichnet, dass** die Bewegungsrichtung der reziproken Bewegung eine überwiegende zur Abfuhrrichtung parallele Richtungskomponente aufweist.

2. Verfahren nach Anspruch 1, bei dem die reziproke Bewegung aufeinanderfolgend wiederholt wird, insbesondere mit einer Wiederholungsfrequenz von größer 10 Hz und/oder kleiner als 90 Hz.

3. Verfahren nach Anspruch 2, bei dem die Wiederholfrequenz größer ist als 15 Hz, bevorzugt größer als 20 Hz, insbesondere größer als 30 Hz und/oder kleiner ist als 80 Hz, bevorzugt kleiner als 75 Hz, insbesondere kleiner als 70 Hz.

4. Verfahren nach einem der vorhergehenden Ansprüche, bei dem eine Bewegungslänge der reziproken Bewegung größer ist als 0,1 mm, bevorzugt größer als 0,15 mm, insbesondere größer als 0,2 mm, und/oder kleiner ist als 1 mm, bevorzugt kleiner als 0,7 mm, insbesondere kleiner als 0,5 mm.

5. Verfahren nach einem der vorhergehenden Ansprüche, bei dem eine Bewegung der Späne auf der Auflage gewichtskraftunterstützt erfolgt, insbesondere durch eine Neigung des Abfuhrwegs zur Horizontalen von wenigstens 3°, bevorzugt wenigstens 5°, weiter bevorzugt wenigstens 8°, insbesondere wenigstens 10°.

6. Verfahren nach einem der vorhergehenden Ansprüche, bei dem die Neigung des Abfuhrwegs geringer ist als 25°, insbesondere geringer als 20°.

7. Verfahren nach einem der vorhergehenden Ansprüche, bei dem es sich bei der spanenden Bearbeitung um eine Trockenbearbeitung handelt.

8. Verzahnungsmaschine zur spanenden Erzeugung und Bearbeitung von Verzahnungen oder anderen periodischen Strukturen eines metallischen Werkstücks, mit
einem Maschinenbett (100),
einer in dem Maschinenbett angeordneten Werkstückaufnahme (70) zur insbesondere drehbaren Lagerung eines zu bearbeitenden Werkstücks,
einer Spansammelstelle (30) zur Aufnahme angesammelter Späne, und
einer Spanabfuhreinrichtung (74, 10, 20) zum Verbringen der bei der Bearbeitung anfallenden Späne zu der Spansammelstelle, wobei die Spanabfuhreinrichtung einen in einer Abfuhrrichtung verlaufenden Wegabschnitt mit einer geringer als 30° geneigten flächigen Auflage (10) für die Späne aufweist, wobei die Spanabfuhreinrichtung einen die Auflage (10) bei seiner Betätigung in eine reziproke Bewegung entlang einer Bewegungsrichtung versetzenden Aktuator (14) aufweist, **dadurch gekennzeichnet, dass** die Bewegungsrichtung der reziproken Bewegung eine überwiegende zur Abfuhrrichtung parallele Richtungskomponente aufweist.

9. Verzahnungsmaschine nach Anspruch 8, mit einer an den Aktuator angekoppelten Steuereinrichtung, die Steueranweisungen zur Ausführung eines Verfahrens nach einem der Ansprüche 1 bis 7 aufweist.

10. Verzahnungsmaschine nach einem der Ansprüche 8 oder 9, bei dem die flächige Auflage federnd gelagert ist.

11. Verzahnungsmaschine nach einem der Ansprüche 8 bis 10, bei dem der Aktuator ein Linearvibrator (14) ist.

12. Verzahnungsmaschine nach einem der Ansprüche 8 bis 11, bei dem die Spansammelstelle zu einer Seite der Werkstücklagerung angeordnet ist, ein zweiter Bereich der Spanabfuhreinrichtung unbewegliche und geneigte Abschnitte (20) aufweist und ein erster Bereich der Spanabfuhreinrichtung, der von der Spansammelstelle weiter entfernt ist als der zweite Bereich, die bewegliche Auflage aufweist.

13. Verzahnungsmaschine nach Anspruch 12, bei dem der Wegabschnitt ein erster Wegabschnitt ist, der in einen zweiten Wegabschnitt im zweiten Bereich mündet, wobei eine Neigung des zweiten Wegabschnitts insbesondere größer ist als 30°, bevorzugt größer als 35°, insbesondere größer als 40°.

14. Verzahnungsmaschine nach Anspruch 13, bei dem der Quotient aus einer von dem ersten und zweiten Wegabschnitt insgesamt überwundenen Höhendifferenz zur Weglänge von gemeinsam dem ersten und zweiten Wegabschnitt größer ist als 0,12, bevorzugt größer als 0,2, insbesondere größer als 0,28 und/oder kleiner ist als 0,6, bevorzugt kleiner ist als 0,52, insbesondere kleiner ist als 0,44.

15. Verzahnungsmaschine nach einem der Ansprüche 8 bis 14, mit zwei oder mehreren, insbesondere genau zwei flächigen, durch einen jeweiligen Aktuator (14) in reziproke Bewegung versetzbaren, insbesondere in dem zweiten Bereich angeordneten Auflagen (10, 10).

16. Verzahnungsmaschine nach einem der Ansprüche 12 bis 15, mit einem Wartungszugang (90) zu der Werkstücklagerung, der, in Projektion auf eine horizontale Ebene gesehen, sich mit dem ersten Bereich überschneidet.

## Claims

1. A method for the production or machining of gear teeth or other periodic structures of a metallic workpiece, in which the chips produced are routed via a chip removal device (74, 10, 20) to a chip collection point (30), wherein the chip removal device comprises a discharge channel running in a discharge direction with a tilt of less than 30° and having a flat base (10) on which discharged chips come to rest, wherein the base (10) is allowed to perform a reciprocating motion in a direction of movement, **characterised in that** the direction of movement of the reciprocating motion has a directional component substantially parallel to the direction of discharge.

2. The method according to claim 1, wherein the reciprocating motion is repeated successively, in particular with a repetition frequency of greater than 10 Hz and/or less than 90 Hz.

3. The method according to claim 2, wherein the repetition frequency is greater than 15 Hz, preferably greater than 20 Hz, in particular greater than 30 Hz and/or less than 80 Hz, preferably less than 75 Hz, in particular less than 70 Hz.

4. The method according to one of the preceding claims, wherein a movement length of the reciprocating motion is greater than 0.1 mm, preferably greater than 0.15 mm, in particular greater than 0.2 mm, and/or less than 1 mm, preferably less than 0.7 mm, in particular less than 0.5 mm.

5. The method according to one of the preceding claims, wherein a movement of the chips on the base is assisted by their own weight, in particular through a tilt of the discharge channel, relative to the horizontal plane, of at least 3°, preferably at least 5°, more preferably 8°, in particular at least 10°.

6. The method according to one of the preceding claims, wherein the tilt of the discharge channel is less than 25°, in particular less than 20°.

7. The method according to one of the preceding claims, wherein the machining involved is dry machining.

8. A gear cutting machine for the production and machining of gear teeth or other periodic structures of a metallic workpiece, comprising:
a machine bed (100),
a workpiece holder (70) arranged in the machine bed for mounting the workpiece to be machined, in particular such that it can rotate,
a collection point (30) for receiving collected chips, and
a chip removal device (74, 10, 20) for transporting the chips produced during machining to the chip collection point, wherein the chip removal device has a channel section running in a discharge direction and having a flat base (10) for the chips, wherein the chip removal device has an actuator (14) which, when actuated, moves the base (10) in a reciprocating motion along a direction of movement, **characterised in that** the direction of movement of the reciprocating motion has a directional component that is substantially parallel to the direction of discharge.

9. The gear cutting machine according to claim 8, having a control device which is coupled to the actuator and has control instructions for performing a method according to claims 1 to 7.

10. The gear cutting machine according to one of claims 8 and 9, in which the flat base is springmounted.

11. The gear cutting machine according to one of claims 8 to 10, in which the actuator is a linear vibrator (14).

12. The gear cutting machine according to one of claims 8 to 11, in which the chip collection point is arranged on one side of the workpiece mount, a second area of the chip removal device has immovable and tilted sections (20), and a first area of the chip removal device, which is further away from the chip collection point than the second area, has the movable base.

13. The gear cutting machine according to claim 12, in which the channel section is a first channel section that leads to a second channel section in the second area, wherein a tilt of the second channel section in particular is greater than 30°, preferably greater than 35°, in particular greater than 40°.

14. The gear cutting machine according to claim 13, in which the quotient of a quotient of the sum of the height differences covered by the first and second channel sections to the combined channel length of the first and second channel sections is greater than 0.12, preferably greater than 0.2, in particular greater than 0.28 and/or less than 0.6, preferably less than 0.52, in particular less than 0.44.

15. The gear cutting machine according to one of claims 8 to 14, having at least two, in particular precisely two flat bases (10, 10) which are movable in reciprocating motion by means of a respective actuator (14) and in particular are arranged in the second area.

16. The gear cutting machine according to one of claims 12 to 15, having a maintenance access point (90) to the workpiece mount, said maintenance access point overlapping with the first area, as seen in a projection on the horizontal plane.

## Revendications

1. Procédé de fabrication ou d'usinage de dentures ou autres structures périodiques d'une pièce d'usinage métallique par enlèvement de matière, dans le cadre duquel les copeaux résultants parviennent à un point de collecte de copeaux (30) en passant par un système d'évacuation de copeaux (74, 10, 20), ledit système d'évacuation de copeaux présentant une voie d'évacuation qui est orientée dans une direction d'évacuation en étant inclinée de moins de 30° et présente une embase (10) plane sur laquelle viennent reposer les copeaux enlevés, ladite embase (10) étant soumise à un mouvement alternatif selon une direction de mouvement, **caractérisé en ce que** la direction du mouvement alternatif présente une composante directionnelle majoritairement parallèle à la direction d'évacuation.

2. Procédé selon la revendication 1, dans lequel le mouvement alternatif est successivement répété, notamment avec une fréquence de répétition supérieure à 10 Hz et/ou inférieure à 90 Hz.

3. Procédé selon la revendication 2, dans lequel la fréquence de répétition est supérieure à 15 Hz, de préférence supérieure à 20 Hz, notamment supérieure à 30 Hz et/ou inférieure à 80 Hz, de préférence inférieure à 75 Hz, notamment inférieure à 70 Hz.

4. Procédé selon l'une des revendications précédentes, dans lequel la longueur du mouvement alternatif est supérieure à 0,1 mm, de préférence supérieure à 0,15 mm, notamment supérieure à 0,2 mm, et/ou inférieure à 1 mm, de préférence inférieure à 0,7 mm, notamment inférieure à 0,5 mm.

5. Procédé selon l'une des revendications précédentes, dans lequel le déplacement des copeaux sur l'embase se fait sous l'influence du poids, notamment grâce à une inclinaison de la voie d'évacuation par rapport à l'horizontale d'au moins 3°, de préférence d'au moins 5°, plus préférablement d'au moins 8°, notamment d'au moins 10°.

6. Procédé selon l'une des revendications précédentes, dans lequel l'inclinaison de la voie d'évacuation est inférieure à 25°, notamment inférieure à 20°.

7. Procédé selon l'une des revendications précédentes, dans lequel l'usinage par enlèvement de matière est un usinage à sec.

8. Machine à tailler les dentures destinée à la fabrication et à l'usinage de dentures ou autres structures périodiques d'une pièce d'usinage métallique, comprenant :
un banc de machine (100),
un support de pièce (70) agencé dans le au banc de machine et destiné notamment à supporter une pièce à usiner, notamment de manière qu'elle puisse subir une rotation,
un point de collecte de copeaux (30) destiné à recueillir les copeaux accumulés, et
un système d'évacuation de copeaux (74, 10, 20) destiné à apporter au point de collecte de copeaux les copeaux résultant de l'usinage, ledit système d'évacuation de copeaux présentant une section de voie qui est orientée dans une direction d'évacuation et présente une embase (10) plane qui reçoit les copeaux, ledit système d'évacuation de copeaux présentant un actionneur (14) qui, une fois activé, occasionne un mouvement alternatif de l'embase (10) selon une direction de mouvement, **caractérisé en ce que** la direction du mouvement alternatif présente une composante directionnelle majoritairement parallèle à la direction d'évacuation.

9. Machine à tailler les dentures selon la revendication 8, comportant un dispositif de commande couplé à l'actionneur et présentant des instructions de commande permettant de réaliser un procédé selon l'une des revendications 1 à 7.

10. Machine à tailler les dentures selon l'une des revendications 8 et 9, dans laquelle l'embase plane est montée sur ressort.

11. Machine à tailler les dentures selon l'une des revendications 8 à 10, dans laquelle l'actionneur est un vibreur linéaire (14).

12. Machine à tailler les dentures selon l'une des revendications 8 à 11, dans laquelle le point de collecte de copeaux est agencé d'un côté du point de montage de la pièce, une deuxième zone du système d'évacuation de copeaux présente des sections (20) immobiles et inclinées, et une première zone du système d'évacuation, davantage éloignée du point de collecte de copeaux que ne l'est la deuxième zone, présente l'embase mobile.

13. Machine à tailler les dentures selon la revendication 12, dans laquelle la section de voie est une première section de voie débouchant dans une deuxième section de voie présente dans la deuxième zone, l'inclinaison de la deuxième section de voie étant notamment supérieure à 30°, de préférence supérieure à 35°, et notamment supérieure à 40°.

14. Machine à tailler les dentures selon la revendication 13, dans laquelle le quotient d'une différence de hauteur couverte au total par la première et la deuxième section de voie rapporté à la longueur de voie totale de la première et de la deuxième section de voie est supérieur à 0,12, de préférence supérieur à 0,2, notamment supérieur à 0,28 et/ou inférieur à 0,6, de préférence inférieur à 0,52, notamment inférieur à 0,44.

15. Machine à tailler les dentures selon l'une des revendications 8 à 14, comportant au moins deux, notamment exactement deux embases (10, 10) planes susceptibles d'être soumises à un mouvement alternatif sous l'effet d'un actionneur (14) respectif et disposées notamment dans ladite deuxième zone.

16. Machine à tailler les dentures selon l'une des revendications 12 à 15, comportant un accès d'entretien (90) au point de montage de la pièce qui, vu en projection sur un plan horizontal, recoupe ladite première zone.
